# EUROPEAN PATENT APPLICATION

(11) **EP 3 875 538 A1**
(43) Date of publication of application: **08.09.2021**
(21) Application number: 19879181.6
(22) Date of filing: 28.10.2019
(51) Int. Cl.: C08L 67/00, C08G 73/10

(54) **POLYESTER RESIN MODIFYING AGENT, METHOD FOR PRODUCING SAME AND POLYESTER RESIN COMPOSITION**

(30) Priority: 31.10.2018 JP 2018205553
(71) Applicant: Nisshinbo Chemical Inc., Tokyo 103-8650 (JP)
(72) Inventor: YANAGISAWA, Kenichi, Chiba-shi, Chiba 267-0056 (JP)
(74) Representative: Steffan & Kiehne Patentanwälte PartG mbB
(86) International application number: PCT/JP2019/042101
(87) International publication number: WO 2020/090703

(57) **Abstract**

Provided are a polyester resin modifying agent, a method for producing the same, and a polyester resin composition including the modifying agent, the polyester resin modifying agent including a polycarbodiimide compound, being capable of improving hydrolysis resistance of a polyester resin, having a small content of a carbodiimidizing catalyst having been used in producing the polyester resin modifying agent, and having suppressed yellowness. Provided are a polyester resin modifying agent in which a polycarbodiimide compound obtained by reacting an aliphatic diisocyanate, an isocyanate-terminal capping agent, and a carbodiimidizing catalyst is included, a content of the carbodiimidizing catalyst falls within a predetermined range, and a yellowness index (YI) is less than 20; a method for producing the polyester resin modifying agent; and a polyester resin composition.

## Description

### Technical Field

The present invention relates to a polyester resin modifying agent suitable for improving hydrolysis resistance of a polyester resin for food packaging material or tableware, to a method for producing the same, and to a polyester resin composition.

### Background Art

Polyester resins are generally excellent in transparency, mechanical strength, workability, solvent resistance, and the like, also excellent in recyclability, and therefore widely used for fibers, films, sheets, and the like.

However, polyester resins are susceptible to hydrolysis due to degradation over time; therefore, a carbodiimide compound is sometimes added thereto as a polyester resin modifying agent for the purpose of suppressing hydrolysis and improving hydrolysis resistance.

As such a carbodiimide compound, a urea-modified carbodiimide described in PTL 1 has been known, for example. This carbodiimide compound has good compatibility with a polyester resin and therefore is considered to effectively improve hydrolysis resistance by addition thereof. Said patent literature states that a yellow transparent urea-modified carbodiimide was synthesized by reaction caused by adding 1.0 part by mass of a carbodiimidizing catalyst with respect to 100 parts by mass of a raw material diisocyanate.

### Citation List

### Patent Literature

PTL1: JP 08-81533 A

### Summary of Invention

### Technical Problem

Incidentally, polyester resins are lightweight and excellent in workability and include biomass plastic and biodegradable plastic which enable efficient use of recyclable organic resources. Therefore, polyester resins are also used for disposable food packaging material and tableware from the viewpoint that the burden on the environment due to disposal is relatively small.

Since food packaging material and tableware are used in direct contact with food, a high level of safety is required. Specifically, various standards and criteria for material quality of food packaging material and tableware are established by official organizations and the like in each country or EU and the like, and material quality of food packaging material and tableware must conform to these standards and criteria. Furthermore, manufacturers and the like sometimes establish more strict independent standards.

As such, with respect to polyester resins used for food packaging material or tableware, strict standards and criteria are also set for chemical substances contained in modifying agents which are additive components of the polyester resins.

However, in the urea-modified carbodiimide described in PTL1 described above, the amount of the water-soluble carbodiimidizing catalyst added in synthesizing the urea-modified carbodiimide is as large as 1.0 part by mass with respect to 100 parts by mass of a raw material diisocyanate. Therefore, an amount of the carbodiimidizing catalyst remaining in the urea-modified carbodiimide obtained through synthesis becomes also large in response to the addition amount.

In addition, the above-described urea-modified carbodiimide is yellow and may not always satisfy safety criteria as a modifying agent for a polyester resin used for food packaging material or tableware. In addition, a highly-colored modifying agent is not preferable also in terms of appearance in obtaining colorless or white polyester resin.

Practically, a polyester resin for food packaging material or tableware in which a carbodiimide compound is used as a modifying agent has not been known so far.

Accordingly, polycarbodiimide compounds serving as a modifying agent for improving hydrolysis resistance of a polyester resin are, in order to be applied to a polyester resin for food packaging material or tableware, required to have a small content of a carbodiimidizing catalyst as an impurity, fully satisfy safety criteria, and be colored as little as possible.

The present invention has been made so as to solve the above problems and aims at providing a polyester resin modifying agent including a polycarbodiimide compound, a method for producing the same, and a polyester resin composition including the modifying agent, the polyester resin modifying agent being capable of improving hydrolysis resistance of polyester resin, having a small content of a carbodiimidizing catalyst having been used in producing the polyester resin modifying agent, and having suppressed yellowness.

### Solution to Problem

The present invention is based on the fact that a polycarbodiimide compound which is capable of improving hydrolysis resistance of a polyester resin, has a small content of a carbodiimidizing catalyst, and has suppressed yellowness has been obtained.

That is, the present invention provides the following [1] to [9].
[1] A polyester resin modifying agent for modifying a polyester resin for food packaging material or tableware comprising: a polycarbodiimide compound obtained by reacting an aliphatic diisocyanate, an isocyanate-terminal capping agent, and a carbodiimidizing catalyst, wherein the isocyanate-terminal capping agent is a compound having one functional group reactive with an isocyanate group, the polycarbodiimide compound is represented by the following general formula (1):

   R²-X-R¹-(N=C=NR¹)ₙ-X-R² (1)

   wherein R¹ represents an aliphatic hydrocarbon group, R² represents a residue derived by removing the functional group from the isocyanate-terminal capping agent, X represents a bond formed by reaction between the functional group and an isocyanate group, and n is an integer of 1 to 20,
   a content of the carbodiimidizing catalyst is 0.02 to 0.3 parts by mass with respect to 100 parts by mass of the aliphatic diisocyanate, and
   a yellowness index (YI) measured according to JIS K 7373:2006 is less than 20.
[2] The polyester resin modifying agent according to [1], wherein the aliphatic diisocyanate is dicyclohexylmethane-4,4'-diisocyanate.
[3] The polyester resin modifying agent according to [1] or [2], wherein the isocyanate-terminal capping agent is one or more selected from the group consisting of an aliphatic monoamine, a monool, and an aliphatic monoisocyanate.
[4] The polyester resin modifying agent according to any one of [1] to [3], wherein the carbodiimidizing catalyst is 3-methyl-1-phenyl-2-phosphorene-1-oxide.
[5] A method for producing the polyester resin modifying agent according to any one of [1] to [4] comprising the steps of: subjecting the aliphatic diisocyanate to polycarbodiimidization reaction in the presence of the carbodiimidizing catalyst to obtain an isocyanate-terminated polycarbodiimide; and performing reaction for capping a terminal isocyanate group of the isocyanate-terminated polycarbodiimide using the isocyanate-terminal capping agent to obtain the polycarbodiimide compound.
[6] The method for producing a polyester resin modifying agent according to [5], wherein the isocyanate-terminal capping agent is mixed with a product of the polycarbodiimidization reaction at a temperature equal to or higher than a boiling point of the isocyanate-terminal capping agent.
[7] A polyester resin composition for food packaging material or tableware comprising: the polyester resin modifying agent according to any one of [1] to [4]; and polyester resin.
[8] The polyester resin composition according to [7], wherein a content of the polyester resin modifying agent is 0.1 to 3.0 parts by mass with respect to 100 parts by mass of the polyester resin.
[9] The polyester resin composition according to [7] or [8], wherein the polyester resin comprises biomass plastic.

### Advantageous Effects of Invention

According to the present invention, a polyester resin modifying agent including a polycarbodiimide compound is provided, the polyester resin modifying agent being capable of improving hydrolysis resistance of polyester resin, having a small content of a carbodiimidizing catalyst having been used in producing the polyester resin modifying agent, and having suppressed yellowness.

Accordingly, the polyester resin modifying agent of the present invention can be preferably applied as a modifying agent added for the purpose of improving hydrolysis resistance of a polyester resin used for food packaging material or tableware subject to tough safety criteria.

In addition, according to the present invention, a production method capable of preferably producing the polyester resin modifying agent and a polyester resin composition for food packaging material or tableware including the modifying agent are provided.

### Description of Embodiments

Hereinafter, a polyester resin modifying agent, method for producing the same, and polyester resin composition of the present invention will be described in detail.

### [Polyester resin modifying agent]

The polyester resin modifying agent of the present invention (hereinafter, simply referred to as the "modifying agent") is a modifying agent for a polyester resin for food packaging material or tableware. The modifying agent is characterized by including a predetermined polycarbodiimide compound obtained by reacting an aliphatic diisocyanate, an isocyanate-terminal capping agent, and a predetermined amount of a carbodiimidizing catalyst and by having a predetermined yellowness index (YI).

The modifying agent of the present invention has a small content of the carbodiimidizing catalyst as an impurity, has a low yellowness index (YI), and can fully satisfy safety criteria when the modifying agent is added to and used for a polyester resin for food packaging material or tableware.

Incidentally, while characteristics of the modifying agent are not particularly limited, the modifying agent is preferably in a solid form, especially, in a powder or pellet form from the viewpoint of ease of handling and the like.

In addition, the modifying agent may contain, in addition to the polycarbodiimide compound, other components such as an antioxidant, a flame retardant, and an ultraviolet absorber as needed to the extent that the effect of imparting hydrolysis resistance to a polyester resin exerted by the polycarbodiimide compound is not hindered and that the yellowness index (YI) does not increase to 20 or more. However, the modifying agent of the present invention is used for food packaging material or tableware, and consideration for safety of chemicals contained is required. In view of this, it is preferable that other components are not contained as far as possible.

### (Polyester resin)

The polyester resin of the present invention is a polyester resin for food packaging material or tableware. The modifying agent of the present invention is intended to be added to such a polyester resin for application with strict safety criteria. The food packaging material and tableware may be disposable or may be used repeatedly.

Food packaging material means overall material for packaging food, and examples thereof include food containers such as cups, bottles, capsules, and lunchboxes; and packaging material for packaging food such as wrapping films, bags, and retort pouches. Incidentally, it does not matter whether the food is in solid or liquid form.

Tableware means overall containers and utensils used for meals, and examples thereof include containers such as dishes, bowls, and cups; chopsticks; and cutlery such as forks, knives, and spoons.

The polyester resin is a resin having a polycondensate of a polycarboxylic acid and a polyhydric alcohol as a basic constitution, and well-known polyester resin can be used. Specific examples thereof include those shown in the description for the polyester resin composition of the present invention described later.

### (Polycarbodiimide compound)

The polycarbodiimide compound is obtained as a reaction product of an aliphatic diisocyanate, an isocyanate-terminal capping agent, and a carbodiimidizing catalyst.

The polycarbodiimide compound is a compound represented by the following general formula (1):

R²-X-R¹-(N=C=N-R¹)ₙ-X-R² (1)

wherein R¹ represents an aliphatic hydrocarbon group, R² represents a residue derived by removing a functional group that has reactivity with an isocyanate group from the isocyanate-terminal capping agent, X represents a bond formed by reaction between the functional group and an isocyanate group, and n is an integer of 1 to 20.

The n represents the number of carbodiimide groups contained in the polycarbodiimide compound represented by formula (1) above, which is referred to as the "polymerization degree of carbodiimide groups" in the present specification.

The n is an integer of 1 to 20, preferably 2 to 18, and more preferably 3 to 16.

Hydrolysis resistance is imparted to a polyester resin by a carbodiimide group. However, when the n exceeds 20, the melting point and the melt viscosity of the polycarbodiimide compound increase, and compatibility with a polyester resin decreases, which is not preferable.

### <Aliphatic diisocyanate>

An aliphatic diisocyanate is an aliphatic compound having two isocyanate groups. R¹ in formula (1) above is an aliphatic hydrocarbon group derived from the aliphatic diisocyanate. Incidentally, the "aliphatic diisocyanate" herein means a diisocyanate compound which is not a compound in which carbon atoms directly bonded to isocyanate groups constitute an aromatic ring. That is, the hydrocarbon group bonded to isocyanate groups may be linear or cyclic and includes a hydrocarbon group in which a carbon atom not directly bonded to isocyanate groups has an aromatic group.

It is not preferable that R¹ described above is derived from a compound in which carbon atoms directly bonded to isocyanate groups constitute an aromatic ring, that is, an aromatic diisocyanate. In such a case, an aromatic amine, which is a decomposition product of the polycarbodiimide compound, may transfer, from food packaging material or tableware made of polyester resin including the modifying agent, to food coming in contact with the food packaging material or the like. Since an intake of such food may have a risk of increasing carcinogenicity, a compound in which R¹ described above is derived from an aromatic diisocyanate is not suitable for food packaging material or tableware application requiring a high level of safety.

The aliphatic diisocyanate includes tetramethylene diisocyanate, hexamethylene diisocyanate, 1,4-cyclohexane diisocyanate, dicyclohexylmethane-4,4'-diisocyanate, methylcyclohexane diisocyanate, 1,3-bis(isocyanatomethyl)cyclohexane, 3-isocyanatomethyl-3,5,5-trimethylcyclohexyl isocyanate (another name: isophorone diisocyanate), xylylene diisocyanate, and 1,3-bis(2-isocyanato-2-propyl)benzene (another name: tetramethylxylylene diisocyanate). One kind of them may be used alone, or two or more kinds thereof may be included. Among these, dicyclohexylmethane-4,4'-diisocyanate is preferable from the viewpoint of stability, the effect of improving hydrolysis resistance of polyester resin, and the like.

### (Isocyanate-terminal capping agent)

The isocyanate-terminal capping agent is a compound having one functional group reactive with an isocyanate group. In formula (1) above, R² is a residue derived by removing the functional group reactive with an isocyanate group from the isocyanate-terminal capping agent, and X is a bond formed by a reaction between the functional group and an isocyanate group. Two isocyanate groups of the aliphatic diisocyanate are capped thereby. Examples of such a compound include a monoamine, a monool, and a monoisocyanate. One of them may be used alone, or two or more thereof may be used in combination.

As the isocyanate-terminal capping agent, one or more aliphatic compounds selected from the group consisting of an aliphatic monoamine, an aliphatic monool, and an aliphatic monoisocyanate are preferable from the viewpoint of reactivity to the aliphatic diisocyanate, and an aliphatic monoamine is more preferably used.

An aliphatic compound with a relatively smaller molecular weight than that of an aromatic monoamine, aromatic monool, or aromatic monoisocyanate is preferable also from the viewpoint of preventing a decrease of a mass concentration, in the polycarbodiimide compound, of carbodiimide groups imparting hydrolysis resistance to a polyester resin.

Among the aliphatic compounds, the aliphatic monoamine is a compound in which one hydrogen atom of an aliphatic hydrocarbon is replaced by an amino group. The aliphatic monool is a compound in which one hydrogen atom of an aliphatic hydrocarbon is replaced by a hydroxy group. The aliphatic monoisocyanate is a compound in which one hydrogen atom of an aliphatic hydrocarbon is replaced by an isocyanate group.

Examples of the aliphatic monoamine include primary amines such as n-propylamine, n-butylamine, isobutylamine, sec-butylamine, tert-butylamine, and cyclohexylamine; and secondary amines such as diethylamine, diisopropylamine, dibutylamine, and dicyclohexylamine.

Examples of the aliphatic monool include methanol, ethanol, 1-butanol, cyclohexanol, polyethylene glycol monomethyl ether, and polypropylene glycol monomethyl ether.

Examples of the aliphatic monoisocyanate include methyl isocyanate, ethyl isocyanate, propyl isocyanate, n-butyl isocyanate, sec-butyl isocyanate, tert-butyl isocyanate, and cyclohexyl isocyanate.

In addition, from the viewpoint of compatibility between the polycarbodiimide compound and the polyester resin, and the like, among the aliphatic compounds, one having an aliphatic hydrocarbon group that has a structure approximating the hydrocarbon group moiety of the aliphatic diisocyanate is preferable as the isocyanate-terminal capping agent. For example, when the aliphatic diisocyanate is dicyclohexylmethane-4,4'-diisocyanate, cyclohexyl amine is preferably used as the isocyanate-terminal capping agent.

### <Carbodiimidizing catalyst>

The carbodiimidizing catalyst has an action of promoting decarboxylation condensation reaction of the aliphatic diisocyanate. Examples thereof include an organic phosphorous compound such as a phosphorene compound and a phosphoric acid ester compound; and an organometallic compound such as a metal alkoxide, a metal carbonyl complex, and a metal acetylacetonato complex. Phosphorene oxides are preferable as the organic phosphorous compound from the viewpoint of catalytic activity and the like. In addition, alkoxides of titanium, hafnium, zirconium, and the like are preferable as the organometallic compound.

Phosphorene oxides are more preferable, and specific examples thereof include 3-methyl-1-phenyl-2-phosphorene-1-oxide, 3-methyl-1-ethyl-1-phosphorene-1-oxide, 1-phenyl-2-phosphorene-1-oxide, 1-ethyl-2-phosphorene-1-oxide, 1-methyl-2-phosphorene-1-oxide, and 3-phosphorene isomers thereof.

Among these, 3-methyl-1-phenyl-2-phosphorene-1-oxide is more preferable from the viewpoint of catalytic activity, availability, and the like.

3-Methyl-1-phenyl-2-phosphorene-1-oxide is hard to cause decomposition and volatilization even when reaction temperature for carbodiimidization reaction is set to a relatively high temperature of 150°C to 180°C and is excellent in stability at a high temperature. For this reason, 3-methyl-1-phenyl-2-phosphorene-1-oxide can advance desired carbodiimidization reaction in a short time at a high temperature even with a relatively small addition amount with respect to the aliphatic diisocyanate. Therefore, side reaction is hard to occur, and the yellowness index (YI) of the modifying agent can be prevented from increasing.

In the modifying agent, the content of the carbodiimidizing catalyst is 0.02 to 0.3 parts by mass, preferably 0.03 to 0.25 parts by mass, and more preferably 0.05 to 0.2 parts by mass with respect to 100 parts by mass of the aliphatic diisocyanate.

The modifying agent is used in synthesizing a polycarbodiimide compound and is characterized in that an amount of the carbodiimidizing catalyst remained in the modifying agent is less than that of a polycarbodiimide compound conventionally used as a common polyester resin modifying agent.

The content of the carbodiimidizing catalyst in the modifying agent is preferably small from the viewpoint of conformity to safety criteria for polyester resin for food packaging material or tableware. In view of the fact that the amount of the carbodiimidizing catalyst added at the time of synthesizing a polycarbodiimide compound used as the modifying agent is possibly an upper limit amount of the content of the carbodiimidizing catalyst, the amount added is considered to be the content of the carbodiimidizing catalyst in the modifying agent in the present invention.

When the content of the carbodiimidizing catalyst is 0.02 parts by mass or more, carbodiimidization reaction can be sufficiently promoted, and an increase in the yellowness index (YI) caused as reaction time becomes longer can be prevented. In addition, when the content of the carbodiimidizing catalyst is 0.3 parts by mass or less, safety criteria can be fully satisfied as a modifying agent to be added to a polyester resin for food packaging material or tableware.

### <Yellowness index (YI)>

The modifying agent has a yellowness index (YI) of less than 20, preferably 19 or less. Since the modifying agent of the present invention is intended to be added to a polyester resin for food packaging material or tableware, the yellowness index (YI) thereof is set to such a low value. A low yellowness index (YI) can be a rough indication of a high purity of the polycarbodiimide compound.

The yellowness index (YI) herein is a value obtained by the measurement method according to JIS K 7373:2006. The yellowness index (YI) indicates a degree of hue going away from colorless or white toward yellow, and a larger value indicates higher yellowness. When the yellowness index (YI) is less than 20, it can be considered to be almost colorless or white to light yellow by visual observation.

### [Method for producing polyester resin modifying agent]

The method for producing the modifying agent can be preferably the production method of the present invention. Specifically, the modifying agent is preferably produced by a production method including subjecting the aliphatic diisocyanate to polycarbodiimidization reaction using the carbodiimidizing catalyst to obtain an isocyanate-terminated polycarbodiimide; and performing reaction for capping a terminal isocyanate group of the isocyanate-terminated polycarbodiimide using the isocyanate-terminal capping agent to obtain the polycarbodiimide compound.

In this manner, by virtue of capping a terminal isocyanate group of the isocyanate-terminated polycarbodiimide by adding the isocyanate-terminal capping agent after performing polycarbodiimidization reaction, the synthesis time to obtain a desired polycarbodiimide compound can be reduced to about 1/6 of that in the case where the isocyanate-terminal capping agent is added prior to the carbodiimidizing catalyst, and the yellowness index (YI) can be prevented from increasing.

As a specific aspect of the production method, a method described in the examples described later can be employed, for example.

The isocyanate-terminal capping agent is preferably mixed with the isocyanate-terminated polycarbodiimide at a temperature equal to or higher than the boiling point of the isocyanate-terminal capping agent.

Specifically, capping reaction is performed by creating a high temperature molten state in which the temperature of the isocyanate-terminated polycarbodiimide is equal to or higher than the boiling point of the isocyanate-terminal capping agent to be mixed and mixing the isocyanate-terminal capping agent thereto.

By virtue of employing such a high temperature condition, thickening of reaction liquid is suppressed, capping reaction is enabled to be uniformly performed in a short time, the yellowness index (YI) can be prevented from increasing, and a desired polycarbodiimide compound can be efficiently obtained.

It is preferable that mixing of the isocyanate-terminal capping agent is carried out by slowly and gradually introducing the isocyanate-terminal capping agent by little and little to the isocyanate-terminated polycarbodiimide in the high temperature molten state from the viewpoint of preventing the yellowness index (YI) from increasing by uniformly progressing reaction. For example, a method in which the isocyanate-terminal capping agent is dropped from the vicinity of the surface of the molten liquid of the isocyanate-terminated polycarbodiimide while stirring the molten liquid, a method in which the isocyanate-terminal capping agent is supplied, for example, via an introduction tube the flow rate inside which can be controlled by bubbling or the like, to molten liquid of the isocyanate-terminated polycarbodiimide that is being stirred, and the like are exemplified.

### [Polyester resin composition]

The polyester resin composition of the present invention is a polyester resin composition for food packaging material or tableware and includes the above-described polyester resin modifying agent of the present invention and a polyester resin. That is, the polyester resin composition is obtained by adding the modifying agent to a polyester resin for food packaging material or tableware.

From the viewpoint of performance and the like required for its application, the polyester resin composition may include an additive such as an antioxidant, a flame retardant, and a colorant, as needed, to the extent that the effect of imparting hydrolysis resistance exerted by the modifying agent is not hindered and that safety criteria for applying polyester resin to food packaging material or tableware application are satisfied.

The phrase "for food packaging material or tableware" herein has the same meaning as described for polyester resins in relation to the modifying agent described above.

Examples of the polyester resin include polyethylene terephthalate (PET), polybutylene terephthalate (PBT), polybutylene succinate (PBS), polybutylene succinate adipate (PBSA), polybutylene adipate terephthalate (PBAT), a polyhydroxyalkanoic acid (PHA) such as polylactic acid (PLA) and polyhydroxy butyric acid (PHB), polyethylene naphthalate, polyallylate, and an ethylene terephthalate-isophthalate copolymer. One kind of them may be used alone, or two or more kinds thereof may be used in combination. Among these, PET, PBT, PBS, PBSA, PLA, and PHB are preferably used from the viewpoint of industrial availability, recyclability, and the like.

From the viewpoint of environment preservation, the polyester resin preferably includes carbon-neutral biomass plastic effectively utilizing recyclable organic resources. Examples of the biomass plastic include PLA and PHB.

In addition, especially in a case where the polyester resin is used for disposable food packaging material or tableware application, the polyester resin is preferably biodegradable plastic from the viewpoint of reducing the burden on the environment due to disposal.

In the polyester resin composition, a content of the modifying agent is preferably 0.1 to 3.0 parts by mass, more preferably 0.2 to 2.5 parts by mass, and still more preferably 0.3 to 2.0 parts by mass with respect to 100 parts by mass of the polyester resin.

When the content is 0.1 parts by mass or more, hydrolysis resistance of a polyester resin for food packaging material or tableware application can be sufficiently improved. In addition, when the content is 3.0 parts by mass or less, food packaging material or tableware made of a polyester resin produced from the polyester resin composition fully satisfies safety criteria with respect to the content of the carbodiimidizing catalyst included therein.

The polyester resin composition can be obtained by melting and kneading the modifying agent and the polyester resin. At this time, a mixture obtained by mixing the modifying agent and the polyester resin in advance may be molten and kneaded, or the modifying agent may be added to the polyester resin having been molten followed by kneading. Furthermore, a resin compound such as a masterbatch is once prepared, and the resin compound and polyester resin may be molten and kneaded by any of the above methods. Incidentally, the above-described additives may be added besides the modifying agent to the extent not impairing the effect of the present invention.

Melting and kneading means is not particularly limited, and a known kneader can be used. Examples of the kneader include a single-screw extruder, a twin-screw extruder, and a rolling mixer.

Production of food packaging material or tableware, which is a polyester resin product, from the polyester resin composition can be carried out by molding using a known method such as an injection molding method, a film molding method, a blow molding method, and a foam molding method. The polyester resin composition can be molded into various forms such as a film form, a sheet form, and a block form at a temperature equal to or higher than the melting point of the polyester resin used and processed into a desired food packaging material or tableware.

### Examples

Hereinafter, the present invention is described in detail with reference to Examples. However, the present invention is not limited thereby.

### [Method for producing polyester resin modifying agent]

In the following Examples and Comparative Examples, polycarbodiimide compounds were synthesized, and the synthesized polycarbodiimide compounds were used as polyester resin modifying agents.

Details of the raw material compounds used for synthesizing the polycarbodiimide compounds (polyester resin modifying agents) in Examples and Comparative Examples described below are shown below.

### <Aliphatic diisocyanate>

HMDI: dicyclohexylmethane-4,4'-diisocyanate; molecular weight: 262.35
TMXDI: 1,3-bis(2-isocyanato-2-propyl)benzene; molecular weight: 244.29
IPDI: 3-isocyanatomethyl-3,5,5-trimethylcyclohexyl isocyanate; molecular weight: 222.29

### <Isocyanate-terminal capping agent>

BA: n-butylamine; molecular weight: 73.14, boiling point: 78°C
CHA: cyclohexylamine; molecular weight: 99.18, boiling point: 135°C
MPG4: tetraethylene glycol monomethyl ether; molecular weight: 208.25, boiling point: 295°C
BO: 1-butanol; molecular weight: 74.12, boiling point: 118°C
PA: n-propylamine; molecular weight: 59.11, boiling point: 49°C

Analyses and measurement in synthesizing polycarbodiimide compounds were conducted by the apparatuses and method shown below.

### <Infrared (IR) spectrum measurement>

Apparatus used: Fourier transform infrared spectrophotometer "FTIR-8200PC" (manufactured by SHIMADZU CORPORATION)

### <Polymerization degree of carbodiimide groups>

Apparatus used: automatic titrator "COM-900" (manufactured by HIRANUMA Co., Ltd.)

A toluene solution of di-n-butylamine at a known concentration was mixed with an isocyanate-terminated polycarbodiimide obtained through polycarbodiimidization reaction, the terminal isocyanate group and di-n-butylamine were reacted, di-n-butylamine remaining was subjected to neutralization titration with a hydrochloric acid standard solution, and the remaining amount of isocyanate groups (terminal NCO amount [mass%]) was calculated by a potentiometric titration method. The polymerization degree n of carbodiimide groups was obtained from this terminal NCO amount.

### (Example 1)

To a reaction container equipped with a reflux condenser and a stirrer were added 100 parts by mass of HMDI and, as a carbodiimidizing catalyst, 0.05 parts by mass of 3-methyl-1-phenyl-2-phosphorene-1-oxide followed by stirring and mixing at 185°C for 45 hours in a nitrogen stream to conduct carbodiimidization reaction to obtain an isocyanate-terminated polycarbodiimide.

With respect to the obtained isocyanate-terminated polycarbodiimide, an absorption peak around the wavelength of 2150 cm⁻¹ derived from the carbodiimide group was observed by IR spectrum measurement. In addition, the amount of terminal NCO was 6.20% by mass, and the polymerization degree of the carbodiimide group was 5.

Thereafter, the isocyanate-terminated polycarbodiimide was heated to 185°C, and, in a nitrogen stream, 9.3 parts by mass (an equivalent amount to the amount of terminal isocyanate groups in the isocyanate-terminated polycarbodiimide in terms of mole) of BA was supplied to molten liquid of the isocyanate-terminated polycarbodiimide via an introduction tube followed by stirring and mixing for 0.5 hours to conduct capping reaction for terminal isocyanate groups.

After the absorption peak at the wavelength of 2200 to 2300 cm⁻¹ derived from isocyanate groups was confirmed to have disappeared by IR spectrum measurement, the reaction product was taken out of the reaction container and cooled to room temperature to obtain a light yellow transparent solid polycarbodiimide compound.

### (Examples 2 to 11 and Comparative Example 13)

Each polycarbodiimide compound having the predetermined polymerization degree n shown in Table 1 below was synthesized in the same manner as in Example 1 except that the diisocyanate compound, isocyanate-terminal capping agent, and reaction conditions (catalyst amount, temperature, and time) of carbodiimidization reaction were respectively changed as shown in Table 1 below in Example 1.

### (Comparative Example 1)

To a reaction container equipped with a reflux condenser and a stirrer were added 100 parts by mass of HMDI and 9.3 parts by mass of BA followed by stirring at 50°C for one hour to conduct capping reaction for terminal isocyanate groups.

Thereafter, 0.05 parts by mass of 3-methyl-1-phenyl-2-phosphorene-1-oxide was added as a carbodiimidizing catalyst followed by stirring and mixing at 185°C for 45 hours in a nitrogen stream to conduct carbodiimidization reaction. The time required to confirm, by IR spectrum measurement, that the absorption peak at the wavelength of 2200 to 2300 cm⁻¹ derived from isocyanate groups had disappeared was 270 hours.

The reaction product was then taken out of the reaction container and cooled to room temperature to obtain a yellow transparent solid polycarbodiimide compound (polymerization degree of carbodiimide groups n = 5).

### (Comparative Examples 2 to 12)

Each polycarbodiimide compound having the predetermined polymerization degree n shown in Table 1 below was synthesized in the same manner as in Comparative Example 1 except that the diisocyanate compound, isocyanate-terminal capping agent, and reaction conditions (catalyst amount, temperature, and time) of carbodiimidization reaction were respectively changed as shown in Table 1 below in Comparative Example 1.

Incidentally, the catalyst amount for each of Examples and Comparative Examples shown in Table 1 below is an amount of the carbodiimidizing catalyst with respect to 100 parts by mass of the diisocyanate compound which is raw material for synthesis.

In addition, in Table 1 below, the case where the isocyanate-terminal capping agent was added after the carbodiimidization reaction step is represented by "post," the case where the isocyanate-terminal capping agent was added before the carbodiimidization reaction step is represented by "pre."

### [Preparation of polyester resin composition]

A polyester resin composition was prepared as follows using the polycarbodiimide compound (polyester resin modifying agent) synthesized in each of Examples and Comparative Examples described above and, as a polyester resin, polybutylene succinate (PBSA; "BioPBS (R) FD-92PM," manufactured by PTT MCC Biochem Co., Ltd.).

After 100 parts by mass of PBSA was melted at 170°C using a laboratory mixer ("segment mixer KF70V," manufactured by Toyo Seiki Seisaku-sho, Ltd., LABO PLASTOMILL (R); the same applies hereinafter), 1.0 part by mass of the polycarbodiimide compound was added thereto followed by kneading for three minutes to prepare a polyester resin composition.

### [Evaluation on polyester resin modifying agent and polyester resin composition]

Each of the polyester resin modifying agents and polyester resin compositions obtained above was evaluated in terms of the following items. Evaluation results thereof are summarized and shown in Table 1 below.

### (Yellowness index (YI))

The yellowness index (YI) of the polyester resin modifying agent was measured according to JIS K 7373:2006 using a handy spectroscopic color difference meter "NF333" (manufactured by NIPPON DENSHOKU INDUSTRIES CO., LTD).

A larger YI value indicates higher yellowness.

### (Hydrolysis resistance)

The polyester resin composition was molded into a sheet form with a thickness of about 300 µm by hot pressing at 170°C, and a strip-shaped specimen with a width of 10 mm and a length of 10 cm was subsequently prepared.

Tensile tests were conducted immediately after the preparation (early stage) and after damp heat treatment. The damp heat treatment was carried out by exposing the specimen to a temperature of 70°C and relative humidity of 90% for 200 hours using a damp heat tester.

The tensile test was carried out by measuring tensile elongation at breakage of the specimen under conditions of a gauge length of 30 mm and tensile speed of 100 mm/min using a tensile tester ("3365" manufactured by Instron Corporation). The relative ratio of the tensile elongation after damp heat treatment was calculated based on the tensile elongation at the early stage as 100.

The larger the relative ratio of tensile elongation is, the smaller the degree of decrease in tensile elongation before and after damp heat treatment, and hydrolysis resistance can be said to be excellent.

In Table 1 below, evaluation results in which the case where the relative ratio of tensile elongation is 80 or more is designated as "A," the case where the relative ratio of tensile elongation is 60 or more and less than 80 is designated as "B," and the case where the relative ratio of tensile elongation is less than 60 is designated as "C," are shown. Incidentally, as a comparative reference, the same tensile test as described above was also conducted on the case where no polyester resin modifying agent was added, and the evaluation result thereof was C.

### (Catalyst elution)

The polyester resin composition was processed into a sheet form having a rectangular shape with a longitudinal length of 10 cm and a lateral length of 6 cm (surface area: 120 cm² (total of front and back surfaces)) and having a thickness of 1 mm followed by immersion in 200 mL of an ethanol aqueous solution with a concentration of 20% as a pseudo food solvent by mass at 60°C for ten days.

This immersion liquid was freeze-dried by a freeze dryer ("FD-1," manufactured by TOKYO RIKAKIKAI CO., LTD), and the resultant dried matter was dissolved in 1 mL of methanol, and the quantity of the carbodiimidizing catalyst was subsequently determined by high performance liquid chromatography (HPLC) to calculate the catalyst concentration in the pseudo food solvent. Measurement conditions of HPLC are as follows.

### <Measurement conditions>

Column: Partisil 10 ODS-2 (manufactured by Whatman International Ltd., inner diameter 4.6 mm × length 250 mm, particle diameter: 10 µm)
Column temperature: 40°C
Mobile phase: methanol/water = 60/40 (volume ratio), flow rate: 0.6 mL/min
Detector: ultraviolet (UV) detector, detection wavelength: 210 nm

It can be said that the lower the catalyst concentration is, the smaller the amount of the carbodiimidizing catalyst eluted from the polyester resin composition into food is.

In Table 1 below, evaluation results in which the case where the catalyst concentration is less than 50 ppb by mass is designated as "A," and the case where the catalyst concentration is 50 ppb by mass or more is designated as "B" are shown.

**Table 1**

| | | Diisocyanate compound | Carbodiimidization | | | | Isocyanate-terminal capping agent | | Yl | Hydrolysis resistance | Catalyst elution |
|---|---|---|---|---|---|---|---|---|---|---|---|
| | | | Amount of catalyst [mass part] | Temperature [°C] | Time [hr] | Polymerization degree n | Compound | Timing of addition | | | |
| Examples | 1 | HMDI | 0.05 | 185 | 45 | 5 | BA | Post | 18 | A | A |
| | 2 | HMDI | 0.1 | 185 | 30 | 5 | BA | Post | 11 | A | A |
| | 3 | HMDI | 0.2 | 185 | 20 | 5 | BA | Post | 9 | A | A |
| | 4 | HMDI | 0.1 | 185 | 30 | 5 | CHA | Post | 11 | A | A |
| | 5 | HMDI | 0.1 | 185 | 30 | 5 | MPG4 | Post | 9 | A | A |
| | 6 | HMDI | 0.1 | 185 | 30 | 5 | BO | Post | 10 | A | A |
| | 7 | TMXDI | 0.2 | 185 | 75 | 5 | MPG4 | Post | 19 | B | A |
| | 8 | IPDI | 0.1 | 140 | 15 | 5 | MPG4 | Post | 13 | B | A |
| | 9 | HMDI | 0.1 | 185 | 18 | 3 | BA | Post | 6 | A | A |
| | 10 | HMDI | 0.1 | 185 | 46 | 10 | BA | Post | 13 | A | A |
| | 11 | HMDI | 0.1 | 185 | 72 | 15 | PA | Post | 18 | A | A |
| Comparative Examples | 1 | HMDI | 0.05 | 185 | 270 | 5 | BA | Pre | ≥ 20 | A | A |
| | 2 | HMDI | 0.1 | 185 | 180 | 5 | BA | Pre | ≥ 20 | A | A |
| | 3 | HMDI | 0.2 | 185 | 120 | 5 | BA | Pre | ≥ 20 | A | A |
| | 4 | HMDI | 0.1 | 185 | 180 | 5 | CHA | Pre | ≥ 20 | A | A |
| | 5 | HMDI | 0.1 | 185 | 180 | 5 | MPG | Pre | ≥ 20 | A | A |
| | 6 | HMDI | 0.1 | 185 | 180 | 5 | BO | Pre | ≥ 20 | A | A |
| | 7 | TMXDI | 0.2 | 185 | 450 | 5 | MPG | Pre | ≥ 20 | B | A |
| | 8 | IPDI | 0.1 | 140 | 90 | 5 | MPG | Pre | ≥ 20 | B | A |
| | 9 | HMDI | 0.1 | 185 | 108 | 3 | BA | Pre | ≥ 20 | A | A |
| | 10 | HMDI | 0.1 | 185 | 276 | 10 | BA | Pre | ≥ 20 | A | A |
| | 11 | HMDI | 0.1 | 185 | 432 | 15 | PA | Pre | ≥ 20 | A | A |
| | 12 | HMDI | 0.5 | 185 | 84 | 5 | BA | Pre | ≥ 20 | A | B |
| | 13 | HMDI | 0.5 | 185 | 14 | 5 | BA | Post | 7 | A | B |

As seen from the evaluation results in Table 1, it has been confirmed that the polyester resin modifying agent of the present invention has a small content of the carbodiimidizing catalyst, has a low yellowness index (YI), and is capable of imparting sufficient hydrolysis resistance to polyester resin.

In addition, it can be said that the polyester resin composition to which the modifying agent has been added has a carbodiimidizing catalyst with a small elution amount and can be used as polyester resin for food packaging material or tableware fully satisfying safety criteria.

## Claims

1. A polyester resin modifying agent for modifying a polyester resin for food packaging material or tableware comprising: a polycarbodiimide compound obtained by reacting an aliphatic diisocyanate, an isocyanate-terminal capping agent, and a carbodiimidizing catalyst, wherein
the isocyanate-terminal capping agent is a compound having one functional group reactive with an isocyanate group,
the polycarbodiimide compound is represented by the following general formula (1):
R²-X-R¹-(N=C=N-R¹)ₙ-X-R² (1)
wherein R¹ represents an aliphatic hydrocarbon group, R² represents a residue derived by removing the functional group from the isocyanate-terminal capping agent, X represents a bond formed by reaction between the functional group and an isocyanate group, and n is an integer of 1 to 20,
a content of the carbodiimidizing catalyst is 0.02 to 0.3 parts by mass with respect to 100 parts by mass of the aliphatic diisocyanate, and
a yellowness index (YI) measured according to JIS K 7373:2006 is less than 20.

2. The polyester resin modifying agent according to claim 1, wherein the aliphatic diisocyanate is dicyclohexylmethane-4,4'-diisocyanate.

3. The polyester resin modifying agent according to claim 1 or 2, wherein the isocyanate-terminal capping agent is one or more selected from the group consisting of an aliphatic monoamine, a monool, and an aliphatic monoisocyanate.

4. The polyester resin modifying agent according to any one of claims 1 to 3, wherein the carbodiimidizing catalyst is 3-methyl-1-phenyl-2-phosphorene-1-oxide.

5. A method for producing the polyester resin modifying agent according to any one of claims 1 to 4 comprising the steps of:
subjecting the aliphatic diisocyanate to polycarbodiimidization reaction in the presence of the carbodiimidizing catalyst to obtain an isocyanate-terminated polycarbodiimide; and
performing reaction for capping a terminal isocyanate group of the isocyanate-terminated polycarbodiimide using the isocyanate-terminal capping agent to obtain the polycarbodiimide compound.

6. The method for producing a polyester resin modifying agent according to claim 5, wherein the isocyanate-terminal capping agent is mixed with a product of the polycarbodiimidization reaction at a temperature equal to or higher than a boiling point of the isocyanate-terminal capping agent.

7. A polyester resin composition for food packaging material or tableware comprising: the polyester resin modifying agent according to any one of claims 1 to 4; and a polyester resin.

8. The polyester resin composition according to claim 7, wherein a content of the polyester resin modifying agent is 0.1 to 3.0 parts by mass with respect to 100 parts by mass of the polyester resin.

9. The polyester resin composition according to claim 7 or 8, wherein the polyester resin comprises biomass plastic.
